# EUROPEAN PATENT SPECIFICATION

(11) **EP 4 344 972 B1**
(45) Date of publication and mention of the grant of the patent: **26.11.2025**
(21) Application number: 21946527.5
(22) Date of filing: 25.06.2021
(51) Int. Cl.: B60W 30/095, B60W 10/18, B60T 7/12, G06G 7/48

(54) **CONTROL METHOD FOR VEHICLE, AND DEVICE AND STORAGE MEDIUM**
STEUERUNGSVERFAHREN FÜR FAHRZEUG SOWIE VORRICHTUNG UND SPEICHERMEDIUM
PROCÉDÉ DE COMMANDE POUR VÉHICULE, ET DISPOSITIF ET SUPPORT DE STOCKAGE

(43) Date of publication of application: 03.04.2024
(73) Proprietor: Shenzhen Yinwang Intelligent Technologies Co., Ltd., Shenzhen City, Guangdong 518129 (CN)
(72) Inventor: ZHAO, Shijie, Shenzhen, Guangdong 518129 (CN); LU, Yuanzhi, Shenzhen, Guangdong 518129 (CN)
(74) Representative: Gill Jennings & Every LLP
(86) International application number: PCT/CN2021/102479
(87) International publication number: WO 2022/267035

(56) References cited:
- EP-A2- 1 475 765
- CN-A- 104 648 254
- CN-A- 108 238 047
- CN-A- 109 739 230
- CN-A- 111 540 237
- DE-A1- 102012 210 782
- DE-A1- 102014 204 382
- DE-A1- 102020 004 348
- GB-A- 2 534 882
- US-A1- 2012 235 853
- US-A1- 2019 080 601
- US-B1- 10 074 279

## Description

### TECHNICAL FIELD

This disclosure relates to the field of artificial intelligence technologies, and in particular, to a vehicle control method, a device, and a storage medium.

### BACKGROUND

With increasing development of vehicle autonomous driving technologies, a requirement for a passing capability of an autonomous vehicle is increasingly high. Currently, when the autonomous vehicle encounters an obstacle, the vehicle may pass smoothly by using a technology such as in-lane avoidance or lane change avoidance. However, when the autonomous vehicle travels within narrow traffic space, in-lane avoidance or lane change avoidance cannot be performed. As a result, the autonomous vehicle cannot smoothly pass. In this case, how to enable the autonomous vehicle to smoothly pass through the narrow traffic space is a problem urgently to be resolved currently. DE102012210782A1 discusses a bottleneck assistance system in a motor vehicle. DE102020004348A1 discusses a method and a control arrangement for a vehicle having a protruding object extending outside the body of the vehicle for avoiding a collision involving the protruding object. DE102014204382A1 discusses a method for protecting a vehicle part arranged on the outside of a vehicle.

### SUMMARY

Embodiments of this disclosure provide a vehicle control method, a device, and a storage medium, so that an autonomous vehicle can smoothly pass through narrow traffic space without collision.

According to a first aspect, an embodiment of this disclosure provides a vehicle control method according to appended claim 1.

According to the vehicle control method provided in the first aspect, an electronic device predicts, based on the information about the target object in the preset range of the target traveling path and the continuous space occupied when the vehicle travels on the target traveling path in the current traveling state, whether the vehicle is to collide with the target object when traveling on the target traveling path in the current traveling state, and when it is predicted that the vehicle is to collide with the target object when traveling on the target traveling path in the current traveling state, controls the vehicle to change the traveling state to travel in the target traveling state, so that the vehicle can smoothly pass through the target traveling path without colliding with the target object.

With reference to the first aspect, the controlling the vehicle to travel in a target traveling state when the first prediction result indicates that the vehicle is to collide with the target object when traveling on the target traveling path in the current traveling state includes: obtaining a second predicted channel of the vehicle when the first prediction result indicates that the vehicle is to collide with the target object when traveling on the target traveling path in the current traveling state, where the second predicted channel is continuous space occupied when the vehicle travels on the target traveling path in the target traveling state; obtaining a second prediction result based on the second predicted channel and the information about the target object, where the second prediction result is used to indicate whether the vehicle is to collide with the target object when traveling on the target traveling path in the target traveling state; and when the second prediction result indicates that the vehicle is not to collide with the target object when traveling on the target traveling path in the target traveling state, controlling the vehicle to travel in the target traveling state.

According to the vehicle control method provided in the first aspect, when the vehicle is to collide with the target object when traveling on the target traveling path in the current traveling state, the electronic device predicts whether the vehicle is to collide with the target object when traveling on the target traveling path in the target traveling state, and controls the vehicle to change the traveling state when the vehicle is not to collide with the target object when traveling on the target traveling path in the target traveling state, so as to avoid a case in which the vehicle still cannot pass through the target traveling path after the traveling state of the vehicle is changed, reducing processing efficiency.

With reference to the first aspect, the method further includes: when the second prediction result indicates that the vehicle is to collide with the target object when traveling on the target traveling path in the target traveling state, generating an obstacle avoidance instruction, where the obstacle avoidance instruction is used to update the target traveling path and/or reduce a speed of the vehicle to a preset speed.

According to the vehicle control method provided by the first aspect, the electronic device generates the obstacle avoidance instruction when predicting that a collision still occurs after the vehicle is adjusted to the target traveling state, thereby improving safety of the vehicle.

With reference to the first aspect, in a possible implementation of the first aspect, the method further includes: determining a collision position of the vehicle based on the first predicted channel and the information about the target object; and determining the target traveling state based on the collision position of the vehicle.

According to the vehicle control method provided in this implementation, the electronic device determines the target traveling state based on the predicted collision position, and controls a change of a traveling state at the corresponding position for the collision position, so as to accurately control the traveling state of the vehicle, thereby improving a passing capability of the vehicle in narrow space and reducing energy consumption.

With reference to the first aspect and the possible implementations of the first aspect, in another possible implementation of the first aspect, the method further includes: when the second prediction result indicates that the vehicle is not to collide with the target object when traveling on the target traveling path in the target traveling state, playing and/or displaying a first prompt message, where the first prompt message is used to prompt the target traveling state.

According to the vehicle control method provided in this implementation, the electronic device generates the first prompt information, and plays and/or displays the target traveling state, to prompt the user of the changed traveling state of the vehicle, so that the user learns of the change of a vehicle status in a timely manner, thereby improving user experience.

With reference to the first aspect and the possible implementations of the first aspect, in another possible implementation of the first aspect, the method further includes: when the second prediction result indicates that the vehicle is to collide with the target object when traveling on the target traveling path in the target traveling state, playing and/or displaying a second prompt message, where the second prompt message is used to prompt a collision position of the vehicle.

According to the vehicle control method provided in this implementation, when the vehicle cannot smoothly pass through the target traveling path by changing the traveling state of the vehicle, the electronic device prompts the user of the collision position of the vehicle, so that the user performs a subsequent operation, to avoid collision.

With reference to the first aspect and the possible implementations of the first aspect, in another possible implementation of the first aspect, the current traveling state includes at least one of the following: a sunroof is in an open state, a left rear view mirror is in an open state, and a right rear view mirror is in an open state.

With reference to the first aspect and the possible implementations of the first aspect, in another possible implementation of the first aspect, the method further includes: when the vehicle travels on the target traveling path in the target traveling state, dynamically obtaining a distance between the target object and the vehicle; and when the target object is away from the vehicle, controlling the vehicle to travel in a traveling state before the target traveling state.

According to the vehicle control method provided in this implementation, after the vehicle travels through the target object, the electronic device controls the vehicle to travel in the traveling state before the target traveling state, so that the traveling state of the vehicle is automatically adjusted after an obstacle is eliminated, thereby improving flexibility and convenience of vehicle control.

With reference to the first aspect and the possible implementations of the first aspect, in another possible implementation of the first aspect, the determining the target traveling state based on the collision position of the vehicle includes: if the collision position is a top of the vehicle, determining that the target traveling state includes that the sunroof is in a closed state; or if the collision position is a left side of the vehicle, determining that the target traveling state includes that the left rear view mirror is in a folded state; and/or if the collision position is a right side of the vehicle, determining that the target traveling state includes that the right rear view mirror is in a folded state.

With reference to the first aspect and the possible implementations of the first aspect, in another possible implementation of the first aspect, the determining a collision position of the vehicle includes: determining, based on the information about the target object, a position at which a contour graph of the target object contacts at least one first contour graph of the first predicted channel, where the first contour graph is used to represent a contour of the vehicle in the current traveling state; and determining the collision position of the vehicle based on the position at which the contour graph of the target object contacts the at least one first contour graph of the first predicted channel.

With reference to the first aspect and the possible implementations of the first aspect, in another possible implementation of the first aspect, when the first contour graph is a quadrilateral, four sides of the first contour graph are respectively a front side edge, a rear side edge, a left side edge, and a right side edge that correspond to front, rear, left, and right sides of the vehicle; and the determining the collision position of the vehicle based on the position at which the contour graph of the target object contacts the at least one first contour graph of the first predicted channel includes: if the position at which the contour graph of the target object contacts the at least one first contour graph of the first predicted channel is the front side edge or the rear side edge, determining that the collision position of the vehicle is the left side and the right side of the vehicle; if the position at which the contour graph of the target object contacts the at least one first contour graph of the first predicted channel is the left side edge, determining that the collision position of the vehicle is the left side of the vehicle; or if the position at which the contour graph of the target object contacts the at least one first contour graph of the first predicted channel is the right side edge, determining that the collision position of the vehicle is the right side of the vehicle.

With reference to the first aspect and the possible implementations of the first aspect, in another possible implementation of the first aspect, when the first contour graph is an octagon, eight sides of the first contour graph are respectively a front side edge, a rear side edge, a left side edge, a right side edge, a front left side edge, a front right side edge, a rear left side edge, and a rear right side edge that correspond to front, rear, left, right, front left, front right, rear left, and rear right sides of the vehicle; and the determining the collision position of the vehicle based on the position at which the contour graph of the target object contacts the at least one first contour graph of the first predicted channel includes: if the position at which the contour graph of the target object contacts the at least one contour graph of the first predicted channel is the front left side edge, the rear left side edge, or the left side edge, determining that the collision position of the vehicle is the left side of the vehicle; or if the position at which the contour graph of the target object contacts the at least one contour graph of the first predicted channel is the front right side edge, the rear right side edge, or the right side edge, determining that the collision position of the vehicle is the right side of the vehicle.

According to a second aspect, an embodiment of this disclosure provides an electronic device according to appended claim 7.

With reference to the second aspect, the control unit is specifically configured to: obtain a second predicted channel of the vehicle when the first prediction result indicates that the vehicle is to collide with the target object when traveling on the target traveling path in the current traveling state, where the second predicted channel is continuous space occupied when the vehicle travels on the target traveling path in the target traveling state; obtain a second prediction result based on the second predicted channel and the information about the target object, where the second prediction result is used to indicate whether the vehicle is to collide with the target object when traveling on the target traveling path in the target traveling state; and when the second prediction result indicates that the vehicle is not to collide with the target object when traveling on the target traveling path in the target traveling state, control the vehicle to travel in the target traveling state.

With reference to the second aspect, the control subunit is specifically configured to: when the second prediction result indicates that the vehicle is not to collide with the target object when traveling on the target traveling path in the target traveling state, control the vehicle to adjust from the current traveling state to the target traveling state.

With reference to the second aspect, in a possible implementation of the second aspect, the device further includes: an instruction generation unit, configured to: when the second prediction result indicates that the vehicle is to collide with the target object when traveling on the target traveling path in the target traveling state, generate an obstacle avoidance instruction, where the obstacle avoidance instruction is used to update the target traveling path and/or reduce a speed of the vehicle to a preset speed.

With reference to the second aspect and the possible implementations of the second aspect, in another possible implementation of the second aspect, the device further includes: a traveling state determining unit, and the traveling state determining unit is configured to: determine a collision position of the vehicle based on the first predicted channel and the information about the target object; and determine the target traveling state based on the collision position of the vehicle.

With reference to the second aspect and the possible implementations of the second aspect, in another possible implementation of the second aspect, the device further includes: a first message prompt unit, configured to: when the second prediction result indicates that the vehicle is not to collide with the target object when traveling on the target traveling path in the target traveling state, play and/or display a first prompt message, where the first prompt message is used to prompt the target traveling state.

With reference to the second aspect and the possible implementations of the second aspect, in another possible implementation of the second aspect, the device further includes: a second message prompt unit, configured to: when the second prediction result indicates that the vehicle is to collide with the target object when traveling on the target traveling path in the target traveling state, play and/or display a second prompt message, where the second prompt message is used to prompt a collision position of the vehicle.

With reference to the second aspect and the possible implementations of the second aspect, in another possible implementation of the second aspect, the current traveling state includes at least one of the following: a sunroof is in an open state, a left rear view mirror is in an open state, and a right rear view mirror is in an open state.

With reference to the second aspect and the possible implementations of the second aspect, in another possible implementation of the second aspect, the control unit is further configured to: when the vehicle travels on the target traveling path in the target traveling state, dynamically obtain a distance between the target object and the vehicle; and when the target object is away from the vehicle, control the vehicle to travel in a traveling state before the target traveling state.

For beneficial effects of the electronic device provided in the second aspect and the possible implementations of the second aspect, refer to the beneficial effects brought by the first aspect and the possible implementations of the first aspect. Details are not described herein again.

According to a comparative example, an embodiment of this disclosure provides an electronic device, including a processor and a memory. The memory is configured to store a computer program, and the processor is configured to invoke and run the computer program stored in the memory, to perform the method provided in the first aspect and the possible implementations of the first aspect.

According to another comparative example, an embodiment of this disclosure provides a chip, including a processor, configured to invoke a computer program from a memory and run the computer program, so that a device on which the chip is installed performs the method provided in the first aspect and the possible implementations of the first aspect.

According to a third aspect, an embodiment of this disclosure provides a computer-readable storage medium, configured to store a computer program. The computer program enables a computer to perform the method provided in the first aspect and the possible implementations of the first aspect.

According to a fourth aspect, an embodiment of this disclosure provides a computer program product, including computer program instructions. The computer program instructions enable a computer to perform the method provided in the first aspect and the possible implementations of the first aspect.

According to a further comparative example, an embodiment of this disclosure provides a computer program, and the computer program enables a computer to perform the method provided in the first aspect and the possible implementations of the first aspect.

### BRIEF DESCRIPTION OF DRAWINGS

FIG. 1a to FIG. 1e are schematic diagrams of scenarios according to an embodiment of this disclosure;
FIG. 2 is a schematic flowchart of a vehicle control method 200 according to an embodiment of this disclosure;
FIG. 3 is a schematic diagram of a predicted channel according to an embodiment of this disclosure;
FIG. 4 is a schematic flowchart of a vehicle control method 300 according to an embodiment of this disclosure;
FIG. 5 is a schematic flowchart of a vehicle control method 400 according to an embodiment of this disclosure;
FIG. 6 is a schematic diagram of information about a current traveling state according to an embodiment of this disclosure;
FIG. 7 is a schematic diagram of a prompt image of a target traveling state according to an embodiment of this disclosure;
FIG. 8 is a schematic diagram of another prompt image of a target traveling state according to an embodiment of this disclosure;
FIG. 9a to FIG. 9c are schematic diagrams of images of a collision position of a vehicle according to an embodiment of this disclosure;
FIG. 10 is a schematic flowchart of a vehicle control method 500 according to an embodiment of this disclosure;
FIG. 11a and FIG. 11b are schematic diagrams of contour graphs of a vehicle according to an embodiment of this disclosure;
FIG. 12a and FIG. 12b are schematic diagrams of a separating axis theorem according to an embodiment of this disclosure;
FIG. 13 is a schematic block diagram of an electronic device 600 according to an embodiment of this disclosure;
FIG. 14 is a schematic diagram of a structure of an electronic device 700 according to an embodiment of this disclosure; and
FIG. 15 is a schematic diagram of a structure of an apparatus 800 according to an embodiment of this disclosure.

### DESCRIPTION OF EMBODIMENTS

The following describes the technical solutions in embodiments of this disclosure with reference to the accompanying drawings in embodiments of this disclosure.

The technical solutions of embodiments of this disclosure may be executed by an electronic device. The electronic device may be a mobile device having any appearance, for example, an intelligent vehicle or an intelligent robot.

The electronic device may be further deployed on any mobile device or connected to any mobile device in a wired or wireless manner. When the electronic device is connected to a mobile device, the electronic device may be a terminal device, for example, a smartphone, a tablet computer, a notebook computer, or a desktop computer, but is not limited thereto. Alternatively, the electronic device may be a server. The server may be an independent physical server, or may be a server cluster or a distributed system including a plurality of physical servers, or may be a cloud server that provides a cloud computing service.

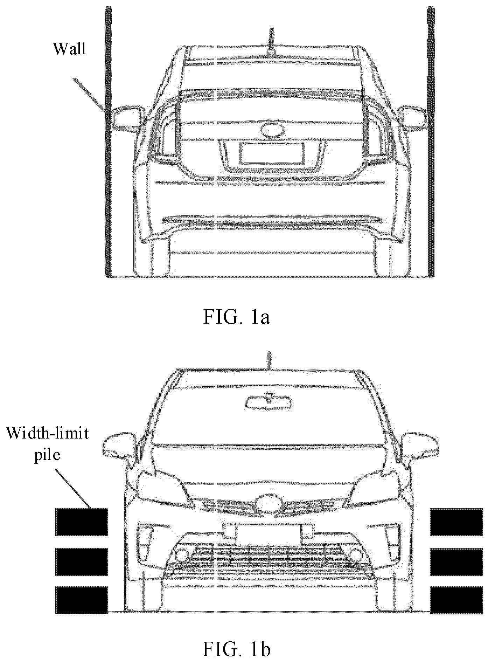

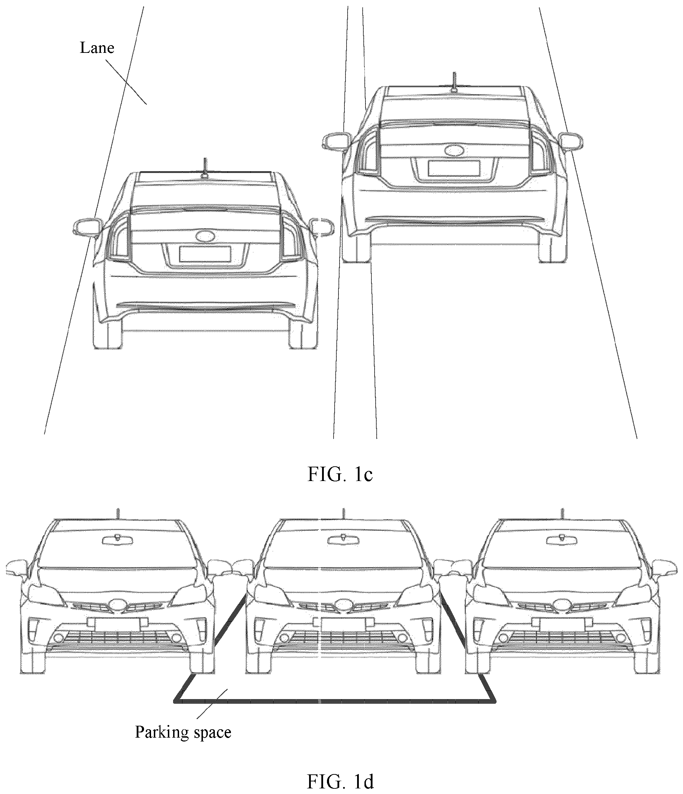

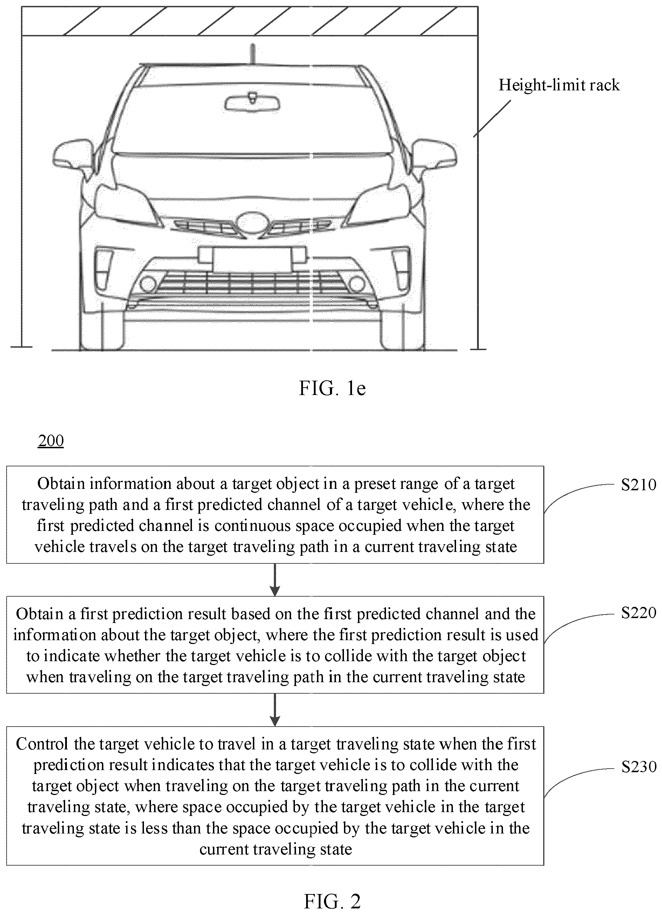

In a moving process, the foregoing mobile device inevitably encounters narrow traffic space. With reference to FIG. 1, using an example in which the mobile device is an autonomous vehicle, the narrow traffic space may be a narrow width of a horizontal road, or may be narrow space of a vertical height, and the narrow traffic space includes but is not limited to a narrow road shown in FIG. 1a, a width-limit road shown in FIG. 1b, space narrowing caused by lane occupation by another vehicle shown in FIG. 1c, narrow parking space shown in FIG. 1d, or a height-limit road section shown in FIG. 1e. In the foregoing scenario, the mobile device cannot smoothly pass through by using a technology such as in-lane obstacle avoidance or lane change.

To resolve the foregoing technical problem, an embodiment of this disclosure provides a vehicle control solution. Based on information about a target object (the target object may be any object that affects vehicle passing) in a preset range of a target traveling path and continuous space to be occupied when a vehicle travels on the target traveling path in a current traveling state, whether the vehicle is to collide with the target object when traveling on the target traveling path in the current traveling state is predicted, and whether to change the current traveling state of the vehicle is determined based on a prediction result, so that the vehicle smoothly passes through narrow space.

The following describes the technical solutions of this disclosure in detail by using specific embodiments.

FIG. 2 is a schematic flowchart of a vehicle control method 200 according to an embodiment of this disclosure. As shown in FIG. 2, the method 200 may include at least one part of the following content:
S210: Obtain information about a target object in a preset range of a target traveling path and a first predicted channel of a vehicle, where the first predicted channel is continuous space occupied when the vehicle travels on the target traveling path in a current traveling state.
S220: Obtain a first prediction result based on the first predicted channel and the information about the target object, where the first prediction result is used to indicate whether the vehicle is to collide with the target object when traveling on the target traveling path in the current traveling state.
S230: Control the vehicle to travel in a target traveling state when the first prediction result indicates that the vehicle is to collide with the target object when traveling on the target traveling path in the current traveling state, where space occupied by the vehicle in the target traveling state is less than the space occupied by the vehicle in the current traveling state.

For S210, it should be noted that the information about the target object may be collected by the vehicle in a traveling process. For example, the vehicle may collect an image of the target object by using an image collection apparatus in the traveling process, or the vehicle may collect information about the target object by using an infrared transceiver apparatus in the traveling process, or the vehicle may collect the information about the target object by using a radar apparatus in the traveling process. Optionally, the radar apparatus may transmit at least one of laser radar, millimeter wave radar, and ultrasonic radar. Alternatively, the information about the target object may be stored in a database.

It should be understood that the target object should be in the preset range of the target traveling path. In other words, the target object may be on the target traveling path, or the target object may be on two sides of the target traveling path, and a vertical distance between the target object and the target traveling path should be less than a preset value.

The target object in this embodiment of this disclosure may be on the ground, or may be suspended above the ground. When the target object is on the ground, the electronic device may determine, in two-dimensional space or three-dimensional space, a distance between the target object and the target traveling path. Optionally, when determining the distance between the target object and the target traveling path in the two-dimensional space, the electronic device may project the target object on a ground plane to obtain two-dimensional data of the target object. When the target object is suspended above the ground, the electronic device may determine, in the three-dimensional space, the distance between the target object and the target traveling path.

Optionally, the information about the target object may include position information of the target object, for example, coordinates of pixels of the target object; and the information about the target object may further include shape information, where the shape information is used to describe a contour of the target object. Optionally, the shape information of the target object may be an abstract graphic shape, for example, may be a polygon.

It should be understood that the vehicle has different body sizes in different traveling states. For example, after the vehicle opens rear view mirrors and folds the rear view mirrors, widths of the body are different, and after the vehicle opens a sunroof or closes the sunroof, heights of the body are different. In S210, the electronic device may obtain the first predicted channel in at least the following two manners: Manner 1: The electronic device may determine the first predicted channel based on the current traveling state of the vehicle and the target traveling path. Manner 2: The electronic device may send the current traveling state of the vehicle to a server, and after the server determines the first predicted channel based on the current traveling state of the vehicle and the target traveling path, the electronic device receives the first predicted channel sent by the server.

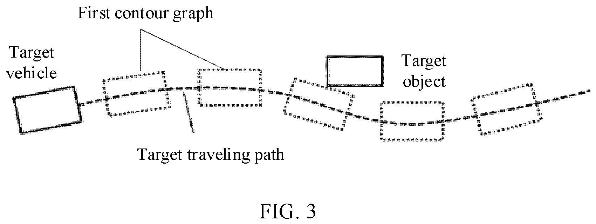

For the foregoing manner 1, with reference to FIG. 3, in some embodiments, the electronic device may obtain a first contour graph of the vehicle based on the current traveling state and prestored vehicle body data, and determine, based on horizontal and vertical coordinates of each coordinate point on the target traveling path and course information of the vehicle at the coordinate point, coordinate information of the first contour graph corresponding to the coordinate point. The electronic device combines the coordinate information of the first contour graph corresponding to each coordinate point on the target traveling path, to obtain the first predicted channel. It should be noted that the first contour graph may be a two-dimensional graph or a three-dimensional graph, and when the first contour graph is a two-dimensional graph, the first contour graph may be a polygon, for example, a quadrilateral or an octagon.

Optionally, the target traveling path may be determined by the electronic device based on navigation data of the vehicle.

For S220, for example, the electronic device may determine, based on the first predicted channel and the information about the target object, whether a graph of the target object has an intersection set with the first predicted channel, so as to predict whether the target object is to collide with the vehicle.

For S230, it should be noted that if the first prediction result indicates that the vehicle is not to collide with the target object when traveling on the target traveling path in the current traveling state, it indicates that the vehicle can smoothly pass through the target traveling path in the current traveling state. In this case, the electronic device may not change the traveling state of the vehicle. If the first prediction result indicates that the vehicle is to collide with the target object when traveling on the target traveling path in the current traveling state, it indicates that the vehicle cannot smoothly pass through the target traveling path in the current traveling state. In this case, the electronic device may change the traveling state of the vehicle, so that the vehicle can smoothly pass through the target traveling path.

Optionally, the current traveling state may include at least one of the following: a sunroof is in an open state, a left rear view mirror is in an open state, and a right rear view mirror is in an open state.

For example, the target traveling state may be a traveling state corresponding to minimum values of a width and a height of the vehicle. To be specific, the space occupied by the vehicle in the target traveling state is less than the space occupied by the vehicle in the current traveling state. For example, the rear view mirrors on both sides of the vehicle are both in a folded state, and the sunroof is in a closed state. In this case, when the electronic device determines that the vehicle cannot pass through the target traveling path in the current traveling state, the electronic device controls the vehicle to adjust the current traveling state to the target traveling state. For example, the electronic device controls the vehicle to close the sunroof and/or the rear view mirrors in the open state, so as to adjust the vehicle from the current traveling state to the target traveling state. Alternatively, the target traveling state may be determined by the electronic device based on a collision position of the vehicle. For example, if the collision position is a left side of the vehicle, the electronic device determines that the target traveling state is that the left rear view mirror is in a folded state. In this case, the electronic device controls the left rear view mirror of the vehicle to fold, to adjust the vehicle from the current traveling state to the target traveling state.

In this embodiment of this disclosure, an electronic device predicts, based on the information about the target object in the preset range of the target traveling path and the continuous space occupied when the vehicle travels on the target traveling path in the current traveling state, whether the vehicle is to collide with the target object when traveling on the target traveling path in the current traveling state, and when it is predicted that the vehicle is to collide with the target object when traveling on the target traveling path in the current traveling state, controls the vehicle to change the traveling state to travel in the target traveling state, so that the vehicle can smoothly pass through the target traveling path without colliding with the target object.

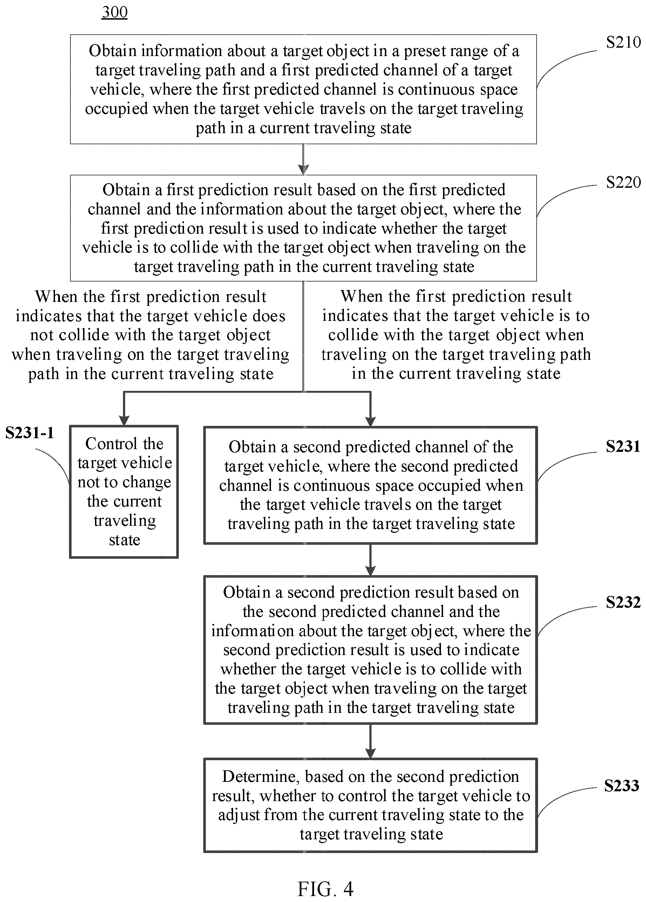

Based on the foregoing embodiment, to further ensure that no collision occurs when the vehicle passes through the target traveling path after the traveling state is changed, so as to improve processing efficiency and ensure traveling safety, a vehicle control solution shown in FIG. 4 is provided.

FIG. 4 is a schematic flowchart of a vehicle control method 300 according to an embodiment of this disclosure. As shown in FIG. 4, after S220, S231 or S231-1 is performed based on the content indicated by the first prediction result. Specific descriptions are as follows:
When the first prediction result indicates that the vehicle is to collide with the target object when traveling on the target traveling path in the current traveling state, S231 to S233 are performed; or when the first prediction result indicates that the vehicle is not to collide with the target object when traveling on the target traveling path in the current traveling state, S231-1 is performed.

S231: Obtain a second predicted channel of the vehicle, where the second predicted channel is continuous space occupied when the vehicle travels on the target traveling path in the target traveling state.

S232: Obtain a second prediction result based on the second predicted channel and the information about the target object, where the second prediction result is used to indicate whether the vehicle is to collide with the target object when traveling on the target traveling path in the target traveling state.

S233: Determine, based on the second prediction result, whether to control the vehicle to adjust from the current traveling state to the target traveling state.

S231-1: Control the vehicle not to change the current traveling state.

The manner in which the electronic device obtains the second predicted channel of the vehicle in S231 is similar to the manner in which the electronic device obtains the first predicted channel of the vehicle in S210. Details are not described herein again. Similar to that the first predicted channel is obtained by combining a plurality of first contour graphs, the second predicted channel is obtained by combining a plurality of second contour graphs. The second contour graph may be a two-dimensional graph or a three-dimensional graph. When the second contour graph is a two-dimensional graph, the second contour graph may be a polygon, for example, a quadrilateral or an octagon.

For example, the electronic device may obtain the second contour graph of the vehicle in the target traveling state based on the current traveling state and pre-recorded vehicle body data.

For S232, for example, the electronic device may determine, based on the second predicted channel and the information about the target object, whether a graph of the target object has an intersection set with the second predicted channel, so as to predict whether the target object is to collide with the vehicle.

For S233, it should be noted that if the second prediction result indicates that the vehicle is not to collide with the target object when traveling on the target traveling path in the target traveling state, it indicates that the vehicle can smoothly pass through the target traveling path after being adjusted from the current traveling state to the target traveling state. In this case, the electronic device may change the traveling state of the vehicle, so that the vehicle can smoothly pass through the target traveling path. If the second prediction result indicates that the vehicle is to collide with the target object when traveling on the target traveling path in the target traveling state, it indicates that the vehicle cannot smoothly pass through the target traveling path in the current traveling state. In this case, the electronic device may not change the traveling state of the vehicle.

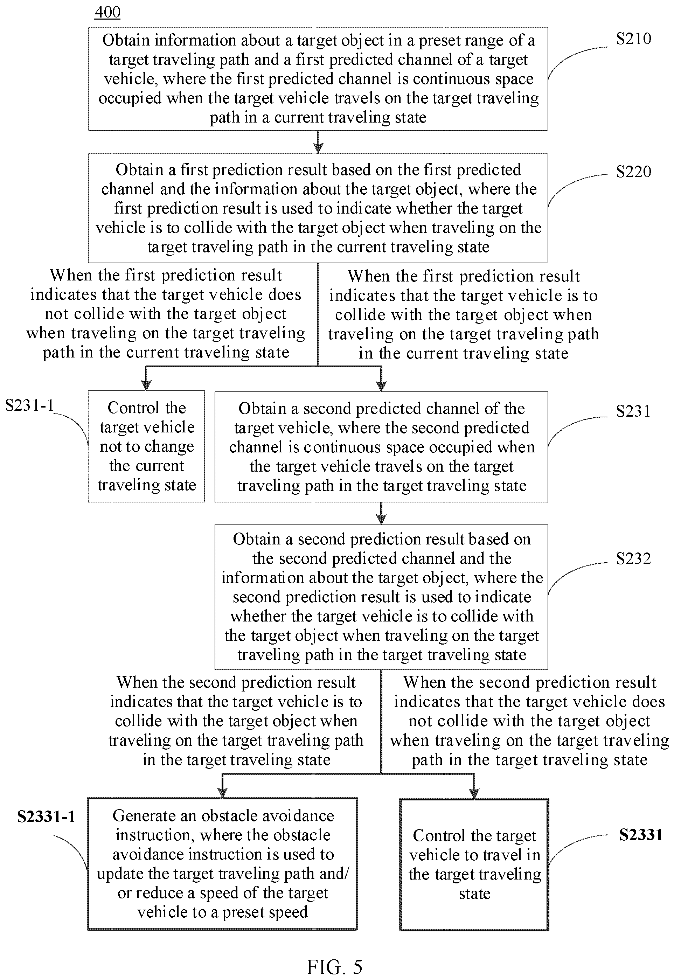

FIG. 5 is a schematic flowchart of a vehicle control method 400 according to an embodiment of this disclosure. With reference to S2331 and S2331-1 shown in FIG. 5, the following describes S233 in the embodiment shown in FIG. 4 by using examples:

When the second prediction result indicates that the vehicle is not to collide with the target object when traveling on the target traveling path in the target traveling state, S2331 is performed. When the second prediction result indicates that the vehicle is to collide with the target object when traveling on the target traveling path in the target traveling state, S2331-1 is performed.

S2331: Control the vehicle to travel in the target traveling state.

S2331-1: Generate an obstacle avoidance instruction, where the obstacle avoidance instruction is used to update the target traveling path and/or reduce a speed of the vehicle to a preset speed.

For S2331-1, it should be noted that after the current traveling state of the vehicle is adjusted to the target traveling state, collision with the target object still cannot be avoided when the vehicle travels on the target traveling path. In this case, the electronic device may generate the obstacle avoidance instruction.

For example, the obstacle avoidance instruction may be used to update the target traveling path, so that the vehicle changes the traveling path by executing the instruction. Alternatively, the obstacle avoidance instruction may be used to reduce the speed of the vehicle to the preset speed, so that the vehicle reduces the traveling speed by executing the instruction. Optionally, the preset speed may be a speed set, for example, may include a plurality of gradually decreasing speed values, so that the vehicle gradually reduces the traveling speed. Alternatively, the obstacle avoidance instruction may be used to indicate to update the target traveling path and reduce the speed of the vehicle to the preset speed. For example, the instruction may control the vehicle to first reduce the speed to the preset speed, and then start to travel based on the updated target traveling path.

In this embodiment, the electronic device predicts whether the vehicle is to collide with the target when traveling on the target traveling path in the target traveling state, adjusts the traveling state of the vehicle to the target traveling state after predicting that no collision occurs, and does not change the traveling state of the vehicle after predicting that a collision still occurs. This avoids a case in which the vehicle still cannot pass through the target traveling path after the traveling state of the vehicle is changed, reducing processing efficiency. Further, when it is predicted that a collision still occurs after the vehicle is adjusted to the target traveling state, the obstacle avoidance instruction is generated, thereby improving safety of the vehicle.

Based on the foregoing embodiment, in this embodiment, when the traveling state of the vehicle is changed, the traveling state and/or a road condition of the traveling path may be prompted by using a human machine interface (Human Machine Interface, HMI), for example, picture display or voice broadcast may be performed. The following provides specific descriptions.

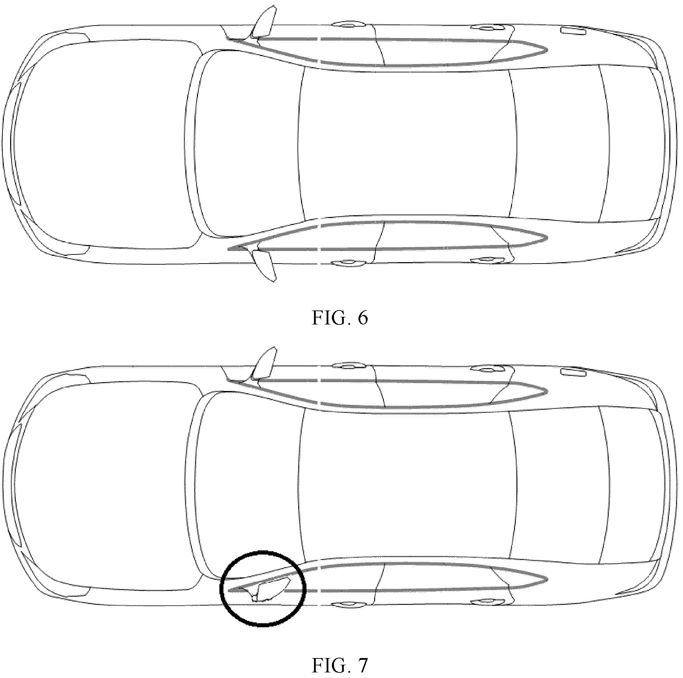

When the vehicle travels in the current traveling state, information about the current traveling state may be displayed. For example, with reference to FIG. 6, the current traveling state is that rear view mirrors on both sides are in an open state, and the sunroof is in a closed state.

In some embodiments, a first prompt message is played and/or displayed when the second prediction result indicates that the vehicle is not to collide with the target object when traveling on the target traveling path in the target traveling state, where the first prompt message is used to prompt the target traveling state.

For example, when the target traveling state is that the left rear view mirror is in a folded state, the first prompt message may include an image in which the left rear view mirror is in a folded state. With reference to FIG. 7, the first prompt message may further include text content that the left rear view mirror is in a folded state, and the first prompt message may further include audio that the left rear view mirror is in a folded state. Optionally, the first prompt message may further include a message used to prompt a road condition of the target traveling path, for example, prompt a user "note that the front left side becomes narrow". When the target traveling state is that the right rear view mirror is in a folded state, a similar case occurs. Details are not described herein again.

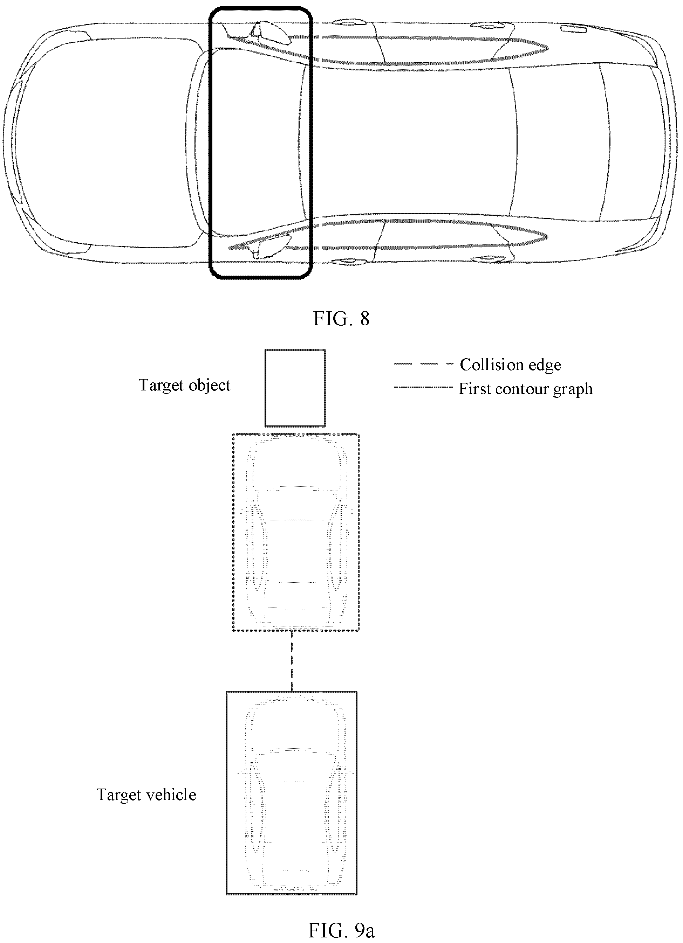

For another example, when the target traveling state is that the rear view mirrors on both sides are in a folded state, the first prompt message may include an image in which the rear view mirrors on both sides are in a folded state. With reference to FIG. 8, the first prompt message may further include text content that the rear view mirrors on both sides are in a folded state, and the first prompt message may further include audio that the rear view mirrors on both sides are in a folded state. Optionally, the first prompt message may further include a message used to prompt a road condition of the target traveling path, for example, prompt the user "note that both front sides become narrow".

In this embodiment, the electronic device generates the first prompt information, and plays and/or displays the target traveling state, to prompt the user of the changed traveling state of the vehicle, so that the user learns of the change of a vehicle status in a timely manner, thereby improving user experience.

In some embodiments, a second prompt message is played and/or displayed when the second prediction result indicates that the vehicle is to collide with the target object when traveling on the target traveling path in the target traveling state, where the second prompt message is used to prompt the collision position of the vehicle.

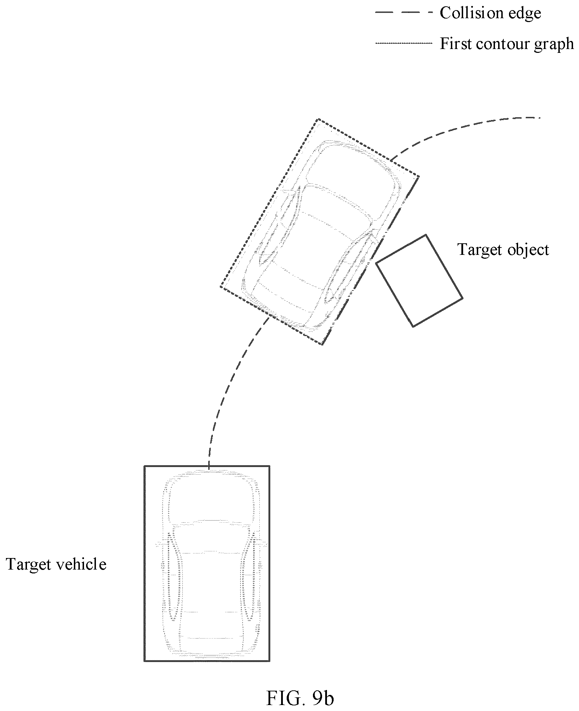

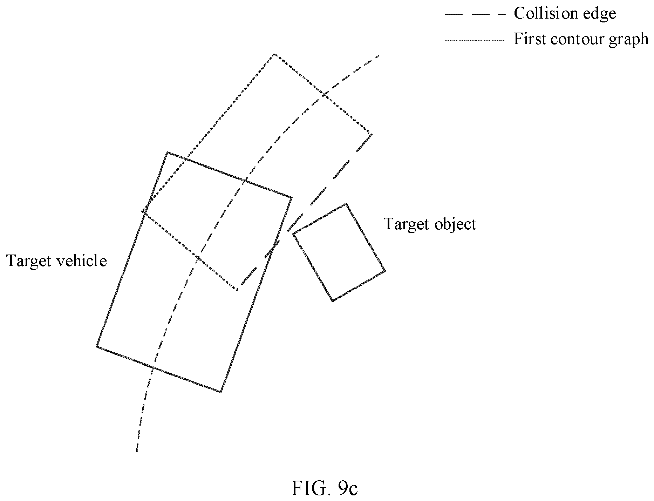

For example, with reference to FIG. 9a to FIG. 9c, the second prompt message may include an image of the collision position of the vehicle. For example, the collision position in FIG. 9a is an image of a front side of the vehicle, the collision position in FIG. 9b is an image of a right side of the vehicle, or the collision position in FIG. 9c is an image of the right side of the vehicle.

In this embodiment, when the vehicle cannot smoothly pass through the target traveling path by changing the traveling state of the vehicle, a user is prompted of the collision position of the vehicle, so that the user performs a subsequent operation, to avoid collision.

In some embodiments, when the vehicle travels on the target traveling path in the target traveling state, the electronic device may dynamically monitor the target object, obtain a distance between the target object and the vehicle, determine, based on the dynamically obtained distance between the target object and the vehicle, whether the target object is far away from the vehicle, and when the target object is far away from the vehicle, control the vehicle to adjust from the target traveling state to a traveling state before the target traveling state. For example, before the vehicle travels in the target traveling state, the left rear view mirror of the vehicle is in an open state. Because the target object collides with the vehicle on the left side of the vehicle, the electronic device controls the vehicle to fold the left rear view mirror, that is, to travel in the target traveling state. After the vehicle moves away from the target object, the electronic device opens the left rear view mirror of the vehicle, that is, the electronic device controls the vehicle to travel in the traveling state before the target traveling state. In this embodiment, after the vehicle travels through the target object, the electronic device controls the vehicle to travel in the traveling state before the target traveling state, so that the traveling state of the vehicle is automatically adjusted after an obstacle is eliminated, thereby improving flexibility and convenience of vehicle control.

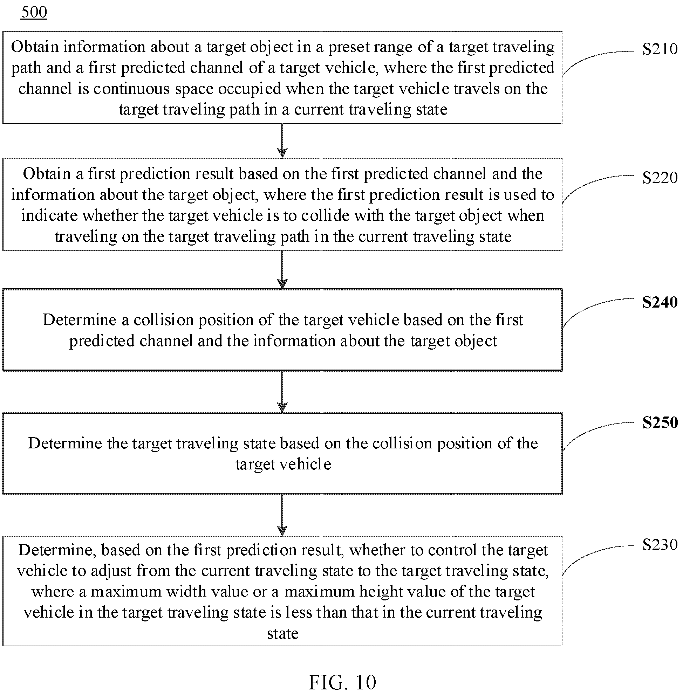

Based on the foregoing embodiments, to implement accurate control on the vehicle, in this embodiment, the target traveling state needs to be confirmed. This embodiment is combined with any one of the embodiments shown in FIG. 2, FIG. 4, and FIG. 5. The following uses the embodiment shown in FIG. 2 as an example for description. FIG. 10 is a schematic flowchart of a vehicle control method 500 according to an embodiment of this disclosure. With reference to FIG. 10, the method includes the following steps.

S240: Determine a collision position of the vehicle based on the first predicted channel and the information about the target object.

S250: Determine the target traveling state based on the collision position of the vehicle.

In this embodiment, S240 and S250 may be performed before or after S230, and this is not limited in this embodiment.

It should be noted that in this embodiment, the target traveling state may be determined based on the collision position at which the target object collides with the vehicle. For example, when the collision position is a top of the vehicle, the electronic device may determine that the target traveling state includes at least that the sunroof is in a closed state, when the collision position is the left side of the vehicle, determine that the target traveling state includes at least that the left rear view mirror is in a folded state, or when the collision position is the right side of the vehicle, determine that the target traveling state includes at least that the right rear view mirror is in a folded state. It should be understood that there may be a plurality of collision positions of the vehicle, for example, both the top of the vehicle and the left side of the vehicle. In this case, the electronic device may determine that the target traveling state includes at least that the sunroof is in a closed state and the left rear view mirror is in a folded state.

To facilitate accurately recognizing the collision position of the vehicle, S240 may include: determining, based on the information about the target object, a position at which a contour graph of the target object contacts at least one first contour graph of the first predicted channel, where the first contour graph is used to represent a contour of the vehicle in the current traveling state; and determining the collision position of the vehicle based on the position at which the contour graph of the target object contacts the at least one first contour graph of the first predicted channel.

It should be noted that the contour graph of the target object and the first contour graph may both be three-dimensional graphs. When the contour graph of the target object and/or the first contour graph are/is a three-dimensional graph, the electronic device may recognize a more accurate collision position. For example, when the target object collides with the left side of the vehicle, the electronic device may predict whether the target object collides with a left rear view mirror position, a tire location, or a window position of the vehicle.

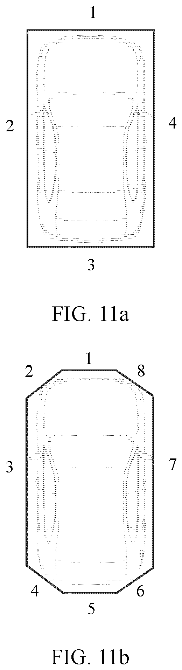

In some embodiments, the first contour graph is a quadrilateral. With reference to FIG. 11a, four sides of the first contour graph are respectively a front side edge 1, a rear side edge 3, a left side edge 2, and a right side edge 4 that correspond to the front, rear, left, and right sides of the vehicle. If the position at which the contour graph of the target object contacts the at least one first contour graph of the first predicted channel is the front side edge 1 or the rear side edge 3, the collision position of the vehicle is the left side and the right side of the vehicle. In this case, the electronic device may determine that the target traveling state includes that the rear view mirrors on both sides are in a folded state, and control the rear view mirrors on both sides of the vehicle to fold. Alternatively, if the position at which the contour graph of the target object contacts the at least one first contour graph of the first predicted channel is the left side edge 2, the collision position of the vehicle is the left side of the vehicle. In this case, the electronic device may determine that the target traveling state includes that the left rear view mirror is in a folded state, and control the left rear view mirror of the vehicle to fold. Alternatively, if the position at which the contour graph of the target object contacts the at least one first contour graph of the first predicted channel is the right side edge 4, the collision position of the vehicle is the right side of the vehicle. In this case, the electronic device may determine that the target traveling state includes that the right rear view mirror is in a folded state, and control the right rear view mirror of the vehicle to fold.

In some embodiments, the first contour graph is an octagon. With reference to FIG. 11b, eight sides of the first contour graph are respectively a front side edge 1, a rear side edge 5, a left side edge 3, a right side edge 7, a front left side edge 2, a front right side edge 8, a rear left side edge 4, and a rear right side edge 6 that correspond to the front, rear, left, right, front left, front right, rear left, and rear right sides of the vehicle. If the position at which the contour graph of the target object contacts the at least one contour graph of the first predicted channel is the front left side edge 2, the rear left side edge 4, or the left side edge 3, the collision position of the vehicle is the left side of the vehicle. In this case, the electronic device may determine that the target traveling state includes that the left rear view mirror is in a folded state, and control the left rear view mirror of the vehicle to fold. If the position at which the contour graph of the target object contacts the at least one contour graph of the first predicted channel is the front right side edge 8, the rear right side edge 6, or the right side edge 7, the collision position of the vehicle is the right side of the vehicle. In this case, the electronic device may determine that the target traveling state includes that the right rear view mirror is in a folded state, and control the right rear view mirror of the vehicle to fold.

It should be understood that when S204 and S205 are performed before S203, a delay may be reduced. When S204 and S205 are performed after S203, S204 and S205 may be performed only when the first prediction result indicates that the vehicle collides with the target object, to reduce energy consumption.

In this embodiment, the electronic device determines the target traveling state based on the predicted collision position, and controls a change of a traveling state at the corresponding position for the collision position, so as to accurately control the traveling state of the vehicle, thereby improving a passing capability of the vehicle in narrow space and reducing energy consumption.

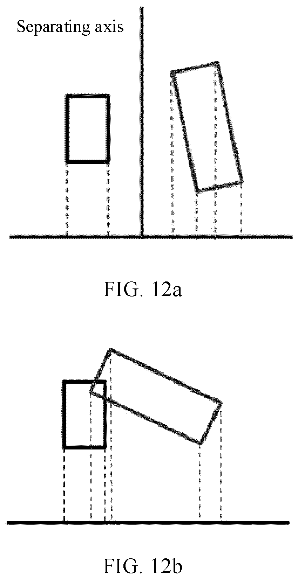

In some embodiments, the determining, based on the information about the target object, a position at which a contour graph of the target object contacts at least one first contour graph of the first predicted channel may specifically include: determining, based on the information about the target object and by using a separating axis theorem, the position at which the contour graph of the target object contacts the at least one first contour graph of the first predicted channel. The following provides descriptions with reference to FIG. 12a and FIG. 12b.

Both the contour graph that is of the target object and that is used to represent a contour of the target object and the contour graph that is of the vehicle and that is used to represent the vehicle in any traveling state are convex polygons. Whether the two convex polygons collide with each other and which side of the vehicle is subject to collision are both determined by using the separating axis theorem.

Separating axis theorem: If two convex polygons do not collide with each other, a straight line (referred to as a separating axis) that can separate the two polygons exists. A normal vector of each side of the two convex polygons is sequentially selected, and the two polygons are projected to each normal vector to obtain two line segments. If two line segments on one normal vector do not overlap, the two convex polygons do not collide with each other. Refer to FIG. 12a. Otherwise, the two convex polygons collide with each other. Refer to FIG. 12b.

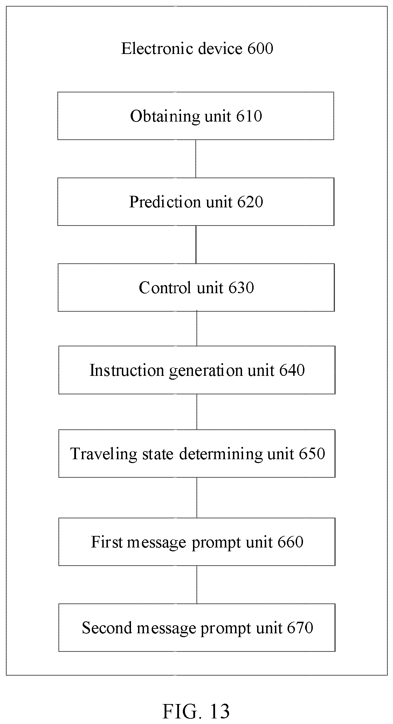

The foregoing describes the method embodiments of this disclosure in detail with reference to FIG. 2 to FIG. 12. The following describes apparatus embodiments of this disclosure in detail with reference to FIG. 13 to FIG. 15. It should be understood that the apparatus embodiments and the method embodiments correspond to each other. For similar descriptions, refer to the method embodiments.

FIG. 13 is a schematic block diagram of an electronic device 600 according to an embodiment of this disclosure. As shown in FIG. 13, the electronic device 600 includes:
an obtaining unit 610, configured to obtain information about a target object in a preset range of a target traveling path and a first predicted channel of a vehicle, where the first predicted channel is continuous space occupied when the vehicle travels on the target traveling path in a current traveling state;
a prediction unit 620, configured to obtain a first prediction result based on the first predicted channel and the information about the target object, where the first prediction result is used to indicate whether the vehicle is to collide with the target object when traveling on the target traveling path in the current traveling state; and
a control unit 630, configured to control the vehicle to travel in a target traveling state when the first prediction result indicates that the vehicle is to collide with the target object when traveling on the target traveling path in the current traveling state, where
space occupied by the vehicle in the target traveling state is less than the space occupied by the vehicle in the current traveling state.

In some embodiments, the control unit 630 is specifically configured to:
obtain a second predicted channel of the vehicle when the first prediction result indicates that the vehicle is to collide with the target object when traveling on the target traveling path in the current traveling state, where the second predicted channel is continuous space occupied when the vehicle travels on the target traveling path in the target traveling state;
obtain a second prediction result based on the second predicted channel and the information about the target object, where the second prediction result is used to indicate whether the vehicle is to collide with the target object when traveling on the target traveling path in the target traveling state; and
when the second prediction result indicates that the vehicle is not to collide with the target object when traveling on the target traveling path in the target traveling state, control the vehicle to travel in the target traveling state.

In some embodiments, the electronic device 600 further includes:
an instruction generation unit 640, configured to: when the second prediction result indicates that the vehicle is to collide with the target object when traveling on the target traveling path in the target traveling state, generate an obstacle avoidance instruction, where the obstacle avoidance instruction is used to update the target traveling path and/or reduce a speed of the vehicle to a preset speed.

In some embodiments, the electronic device 600 further includes a traveling state determining unit 650, and the traveling state determining unit is configured to:
determine a collision position of the vehicle based on the first predicted channel and the information about the target object; and
determine the target traveling state based on the collision position of the vehicle.

In some embodiments, the electronic device 600 further includes:
a first message prompt unit 660, configured to: when the second prediction result indicates that the vehicle is not to collide with the target object when traveling on the target traveling path in the target traveling state, play and/or display a first prompt message, where the first prompt message is used to prompt the target traveling state.

In some embodiments, the electronic device 600 further includes:
a second message prompt unit 670, configured to: when the second prediction result indicates that the vehicle is to collide with the target object when traveling on the target traveling path in the target traveling state, play and/or display a second prompt message, where the second prompt message is used to prompt a collision position of the vehicle.

In some embodiments, the current traveling state includes at least one of the following: a sunroof is in an open state, a left rear view mirror is in an open state, and a right rear view mirror is in an open state.

In some embodiments, the control unit 630 is further configured to:
when the vehicle travels on the target traveling path in the target traveling state, dynamically obtain a distance between the target object and the vehicle; and
when the target object is away from the vehicle, control the vehicle to travel in a traveling state before the target traveling state.

It should be understood that, the units in the electronic device 600 according to this embodiment of this disclosure are respectively used to implement corresponding procedures of the electronic device in the methods shown in FIG. 2 to FIG. 12. For brevity, details are not described herein again.

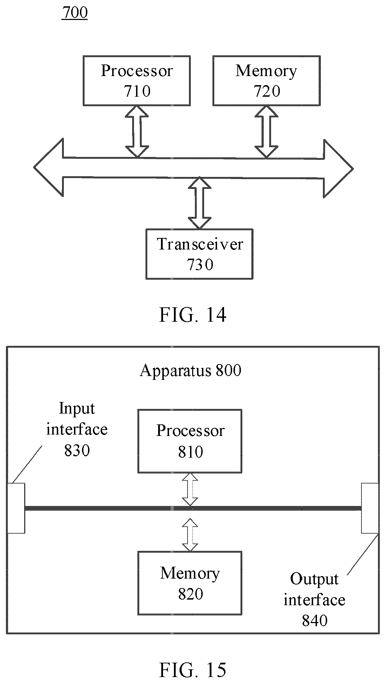

FIG. 14 is a schematic diagram of a structure of an electronic device 700 according to an embodiment of this disclosure. The electronic device 700 shown in FIG. 14 includes a processor 710. The processor 710 may invoke a computer program from a memory and run the computer program, to implement the method in embodiments of this disclosure.

In some embodiments, as shown in FIG. 14, the electronic device 700 may further include a memory 720. The processor 710 may invoke the computer program from the memory 720 and run the computer program, to implement the method in embodiments of this disclosure.

The memory 720 may be an independent device independent of the processor 710, or may be integrated into the processor 710.

In some embodiments, as shown in FIG. 14, the electronic device 700 may further include a transceiver 730. The processor 710 may control the transceiver 730 to communicate with another device. Specifically, information or data may be sent to the another device, or information or data sent by the another device may be received.

The transceiver 730 may include a transmitter and a receiver. The transceiver 730 may further include an antenna, and there may be one or more antennas.

In some embodiments, the electronic device 700 may implement corresponding procedures of the methods in embodiments of this disclosure. For brevity, details are not described herein again.

FIG. 15 is a schematic diagram of a structure of an apparatus 800 according to an embodiment of this disclosure. The apparatus 800 shown in FIG. 15 includes a processor 810. The processor 810 may invoke a computer program from a memory and run the computer program, to implement the method in embodiments of this disclosure.

In some embodiments, as shown in FIG. 15, the apparatus 800 may further include a memory 820. The processor 810 may invoke the computer program from the memory 800 and run the computer program, to implement the method in embodiments of this disclosure.

The memory 820 may be an independent device independent of the processor 810, or may be integrated into the processor 810.

In some embodiments, the apparatus 800 may further include an input interface 830. The processor 810 may control the input interface 830 to communicate with another device or chip, and specifically, may obtain information or data sent by the another device or chip.

In some embodiments, the apparatus 800 may further include an output interface 840. The processor 810 may control the output interface 840 to communicate with another device or chip, and specifically, may output information or data to the another device or chip.

In some embodiments, the apparatus may implement corresponding procedures of the methods in embodiments of this disclosure. For brevity, details are not described herein again.

In some embodiments, the apparatus mentioned in this embodiment of this disclosure may alternatively be a chip. For example, the chip may be a system on chip, a system on chip, a chip system, or a system on chip.

It should be understood that the processor in this embodiment of this disclosure may be an integrated circuit chip, and has a signal processing capability. In an implementation process, steps in the foregoing method embodiment may be implemented by using a hardware integrated logic circuit in the processor, or an instruction in a form of software. The processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The methods, steps, and logic block diagrams disclosed in embodiments of this disclosure may be implemented or executed. The general-purpose processor may be a microprocessor, or the processor may be any conventional processor or the like. Steps of the method disclosed with reference to embodiments of this disclosure may be directly performed and accomplished by a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in this embodiment of this disclosure may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification is intended to include but is not limited to these and a memory of any another proper type.

It should be understood that the foregoing memory is an example but not a limitation. For example, the memory in this embodiment of this disclosure may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory described in this embodiment of this disclosure is intended to include, but not limited to, these memories and any memory of another proper type.

An embodiment of this disclosure further provides a computer-readable storage medium, configured to store a computer program.

In some embodiments, the computer-readable storage medium may be used in the electronic device in embodiments of this disclosure, and the computer program enables a computer to perform corresponding procedures in the methods in embodiments of this disclosure. For brevity, details are not described herein again.

An embodiment of this disclosure further provides a computer program product, including computer program instructions.

In some embodiments, the computer program product may be used in the electronic device in embodiments of this disclosure, and the computer program instructions enable a computer to perform corresponding procedures in the methods in embodiments of this disclosure. For brevity, details are not described herein again.

An embodiment of this disclosure further provides a computer program.

In some embodiments, the computer program may be used in the electronic device in embodiments of this disclosure. When the computer program is run on a computer, the computer is enabled to perform corresponding procedures in the methods in embodiments of this disclosure. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this disclosure, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this disclosure may be integrated into one processing unit, each of the units may exist alone physically, or two or more units are integrated into one unit.

When the functions are implemented in the form of a software functional unit and sold or used as an independent product, the functions may be stored in a computer-readable storage medium. For such an understanding, the technical solutions of this disclosure essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this disclosure. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Therefore, the protection scope of the present invention shall be subject to the protection scope of the claims.

## Claims

1. A vehicle control method, comprising:
obtaining information about a target object in a preset range of a traveling path and a first predicted channel of a vehicle, wherein the first predicted channel is continuous space occupied when the vehicle travels on the target traveling path in a current traveling state (S210);
obtaining a first prediction result based on the first predicted channel and the information about the target object, wherein the first prediction result is used to indicate whether the vehicle is to collide with the target object when traveling on the target traveling path in the current traveling state (S220); and
controlling the vehicle to travel in a target traveling state when the first prediction result indicates that the vehicle is to collide with the target object, wherein
space occupied by the vehicle in the target traveling state is less than the space occupied by the vehicle in the current traveling state; wherein the method is **characterised in that** the controlling the vehicle to travel in a target traveling state when the first prediction result indicates that the vehicle is to collide with the target object when traveling on the target traveling path in the current traveling state comprises:
obtaining a second predicted channel of the vehicle when the first prediction result indicates that the vehicle is to collide with the target object when traveling on the target traveling path in the current traveling state, wherein the second predicted channel is continuous space occupied when the vehicle travels on the target traveling path in the target traveling state (S231);
obtaining a second prediction result based on the second predicted channel and the information about the target object, wherein the second prediction result is used to indicate whether the vehicle is to collide with the target object when traveling on the target traveling path in the target traveling state (S232); and
when the second prediction result indicates that the vehicle is not to collide with the target object, controlling the vehicle to travel in the target traveling state; and wherein the method further comprises:
when the second prediction result indicates that the vehicle is to collide with the target object, generating an obstacle avoidance instruction, wherein the obstacle avoidance instruction is used to update the target traveling path and/or reduce a speed of the vehicle to a preset speed (S2331-1).

2. The method according to claim 1, wherein the method further comprises:
determining a collision position of the vehicle based on the first predicted channel and the information about the target object (S240); and
determining the target traveling state based on the collision position of the vehicle (S250).

3. The method according to claim 1 or 2, wherein the method further comprises:
when the second prediction result indicates that the vehicle is not to collide with the target object when traveling on the target traveling path in the target traveling state, playing and/or displaying a first prompt message, wherein the first prompt message is used to prompt the target traveling state.

4. The method according to any one of claims 1 or 3, wherein the method further comprises:
when the second prediction result indicates that the vehicle is to collide with the target object when traveling on the target traveling path in the target traveling state, playing and/or displaying a second prompt message, wherein the second prompt message is used to prompt a collision position of the vehicle.

5. The method according to any one of claims 1 to 4, wherein the current traveling state comprises at least one of the following: a sunroof is in an open state, a left rear view mirror is in an open state, and a right rear view mirror is in an open state.

6. The method according to any one of claims 1 to 5, wherein the method further comprises:
when the vehicle travels on the target traveling path in the target traveling state, dynamically obtaining a distance between the target object and the vehicle; and
when the target object is away from the vehicle, controlling the vehicle to travel in a traveling state before the target traveling state.

7. An electronic device (600), wherein the device comprises:
an obtaining unit (610), configured to obtain information about a target object in a preset range of a target traveling path and a first predicted channel of a vehicle, wherein the first predicted channel is continuous space occupied when the vehicle travels on the target traveling path in a current traveling state;
a prediction unit (620), configured to obtain a first prediction result based on the first predicted channel and the information about the target object, wherein the first prediction result is used to indicate whether the vehicle is to collide with the target object when traveling on the target traveling path in the current traveling state; and
a control unit (630), configured to control the vehicle to travel in a target traveling state when the first prediction result indicates that the vehicle is to collide with the target object, wherein
space occupied by the vehicle in the target traveling state is less than the space occupied by the vehicle in the current traveling state; wherein
the control unit is **characterised in that** it is specifically configured to:
obtain a second predicted channel of the vehicle when the first prediction result indicates that the vehicle is to collide with the target object when traveling on the target traveling path in the current traveling state, wherein the second predicted channel is continuous space occupied when the vehicle travels on the target traveling path in the target traveling state;
obtain a second prediction result based on the second predicted channel and the information about the target object, wherein the second prediction result is used to indicate whether the vehicle is to collide with the target object when traveling on the target traveling path in the target traveling state; and
when the second prediction result indicates that the vehicle is not to collide with the target object, control the vehicle to travel in the target traveling state; wherein the device further comprises an instruction generation unit (640), configured to:
when the second prediction result indicates that the vehicle is to collide with the target object, generate an obstacle avoidance instruction, wherein the obstacle avoidance instruction is used to update the target traveling path and/or reduce a speed of the vehicle to a preset speed.

8. A computer-readable storage medium, configured to store a computer program, wherein the computer program enables a computer to perform the method according to any one of claims 1 to 6.

9. A computer program product, comprising computer program instructions, wherein the computer program instructions enable a computer to perform the method according to any one of claims 1 to 6.

## Patentansprüche

1. Verfahren zur Steuerung eines Fahrzeugs, umfassend:
Erlangen von Informationen über ein Zielobjekt in einem voreingestellten Bereich eines Fahrwegs und eines ersten vorhergesagten Kanals eines Fahrzeugs, wobei der erste vorhergesagte Kanal ein kontinuierlicher Raum ist, der eingenommen wird, wenn das Fahrzeug in einem aktuellen Fahrzustand (S210) auf dem Zielfahrweg fährt;
Erlangen eines ersten Vorhersageergebnisses auf der Grundlage des ersten vorhergesagten Kanals und der Informationen über das Zielobjekt, wobei das erste Vorhersageergebnis dazu verwendet wird, anzugeben, ob das Fahrzeug mit dem Zielobjekt kollidieren wird, wenn es auf dem Zielfahrweg in dem aktuellen Fahrzustand (S220) fährt; und
Steuern des Fahrzeugs, um in einem Zielfahrzustand zu fahren, wenn das erste Vorhersageergebnis angibt, dass das Fahrzeug mit dem Zielobjekt kollidieren wird, wobei
ein Raum, der durch das Fahrzeug in dem Zielfahrzustand eingenommen wird, kleiner ist als der Raum, der durch das Fahrzeug in dem aktuellen Fahrzustand eingenommen wird; wobei das Verfahren **dadurch gekennzeichnet ist, dass** das Steuern des Fahrzeugs, um in einem Zielfahrzustand zu fahren, wenn das erste Vorhersageergebnis angibt, dass das Fahrzeug mit dem Zielobjekt kollidieren wird, wenn es auf dem Zielfahrweg in dem aktuellen Fahrzustand fährt, Folgendes umfasst:
Erlangen eines zweiten vorhergesagten Kanals des Fahrzeugs, wenn das erste Vorhersageergebnis angibt, dass das Fahrzeug mit dem Zielobjekt kollidieren wird, wenn es auf dem Zielfahrweg in dem aktuellen Fahrzustand fährt, wobei der zweite vorhergesagte Kanal ein kontinuierlicher Raum ist, der eingenommen wird, wenn das Fahrzeug auf dem Zielfahrweg in dem Zielfahrzustand (S231) fährt;
Erlangen eines zweiten Vorhersageergebnisses auf der Grundlage des zweiten vorhergesagten Kanals und der Informationen über das Zielobjekt, wobei das zweite Vorhersageergebnis dazu verwendet wird, anzugeben, ob das Fahrzeug mit dem Zielobjekt kollidieren wird, wenn es auf dem Zielfahrweg in dem Zielfahrzustand (S232) fährt; und
wenn das zweite Vorhersageergebnis angibt, dass das Fahrzeug nicht mit dem Zielobjekt kollidieren wird, Steuern des Fahrzeugs, um in dem Zielfahrzustand zu fahren; und wobei das Verfahren ferner Folgendes umfasst:
wenn das zweite Vorhersageergebnis angibt, dass das Fahrzeug mit dem Zielobjekt kollidieren wird, Erzeugen einer Hindernisvermeidungsanweisung, wobei die Hindernisvermeidungsanweisung dazu verwendet wird, den Zielfahrweg zu aktualisieren und/oder eine Geschwindigkeit des Fahrzeugs auf eine voreingestellte Geschwindigkeit (S2331-1) zu reduzieren.

2. Verfahren nach Anspruch 1, wobei das Verfahren ferner Folgendes umfasst:
Bestimmen einer Kollisionsposition des Fahrzeugs auf der Grundlage des ersten vorhergesagten Kanals und der Informationen über das Zielobjekt (S240); und
Bestimmen des Zielfahrtzustands auf der Grundlage der Kollisionsposition des Fahrzeugs (S250).

3. Verfahren nach Anspruch 1 oder 2, wobei das Verfahren ferner Folgendes umfasst:
wenn das zweite Vorhersageergebnis angibt, dass das Fahrzeug nicht mit dem Zielobjekt kollidieren wird, wenn es auf dem Zielfahrweg in dem Zielfahrzustand fährt, Abspielen und/oder Anzeigen einer ersten Aufforderungsnachricht, wobei die erste Aufforderungsnachricht dazu verwendet wird, den Zielfahrzustand aufzufordern.

4. Verfahren nach einem der Ansprüche 1 oder 3, wobei das Verfahren ferner Folgendes umfasst:
wenn das zweite Vorhersageergebnis angibt, dass das Fahrzeug mit dem Zielobjekt kollidieren wird, wenn es auf dem Zielfahrweg in dem Zielfahrzustand fährt, Abspielen und/oder Anzeigen einer zweiten Aufforderungsnachricht, wobei die zweite Aufforderungsnachricht dazu verwendet wird, eine Kollisionsposition des Fahrzeugs aufzufordern.

5. Verfahren nach einem der Ansprüche 1 bis 4, wobei der aktuelle Fahrzustand mindestens einen der Folgenden umfasst: ein Schiebedach ist in einem offenen Zustand, ein linker Rückspiegel ist in einem offenen Zustand und ein rechter Rückspiegel ist in einem offenen Zustand.

6. Verfahren nach einem der Ansprüche 1 bis 5, wobei das Verfahren ferner Folgendes umfasst:
wenn das Fahrzeug auf dem Zielfahrweg in dem Zielfahrzustand fährt, dynamisches Erlangen eines Abstands zwischen dem Zielobjekt und dem Fahrzeug; und
wenn das Zielobjekt von dem Fahrzeug entfernt ist, Steuern des Fahrzeugs, um in einem Fahrzustand vor dem Zielfahrzustand zu fahren.

7. Elektronische Vorrichtung (600), wobei die Vorrichtung Folgendes umfasst:
eine Erlangungseinheit (610), die dazu konfiguriert ist, Informationen über ein Zielobjekt in einem voreingestellten Bereich eines Zielfahrwegs und eines ersten vorhergesagten Kanals eines Fahrzeugs zu erlangen, wobei der erste vorhergesagte Kanal ein kontinuierlicher Raum ist, der eingenommen wird, wenn das Fahrzeug in einem aktuellen Fahrzustand auf dem Zielfahrweg fährt;
eine Vorhersageeinheit (620), die dazu konfiguriert ist, ein erstes Vorhersageergebnis auf der Grundlage des ersten vorhergesagten Kanals und der Informationen über das Zielobjekt zu erlangen, wobei das erste Vorhersageergebnis dazu verwendet wird, anzugeben, ob das Fahrzeug mit dem Zielobjekt kollidieren wird, wenn es auf dem Zielfahrweg in dem aktuellen Fahrzustand fährt; und
eine Steuerungseinheit (630), die dazu konfiguriert ist, das Fahrzeug zu steuern, um in einem Zielfahrzustand zu fahren, wenn das erste Vorhersageergebnis angibt, dass das Fahrzeug mit dem Zielobjekt kollidieren wird, wobei
ein Raum, der durch das Fahrzeug in dem Zielfahrzustand eingenommen wird, kleiner ist als der Raum, der durch das Fahrzeug in dem aktuellen Fahrzustand eingenommen wird; wobei die Steuerungseinheit **dadurch gekennzeichnet ist, dass** sie speziell zu Folgendem konfiguriert ist:
Erlangen eines zweiten vorhergesagten Kanals des Fahrzeugs, wenn das erste Vorhersageergebnis angibt, dass das Fahrzeug mit dem Zielobjekt kollidieren wird, wenn es auf dem Zielfahrweg in dem aktuellen Fahrzustand fährt, wobei der zweite vorhergesagte Kanal ein kontinuierlicher Raum ist, der eingenommen wird, wenn das Fahrzeug auf dem Zielfahrweg in dem Zielfahrzustand fährt;
Erlangen eines zweiten Vorhersageergebnisses auf der Grundlage des zweiten vorhergesagten Kanals und der Informationen über das Zielobjekt, wobei das zweite Vorhersageergebnis dazu verwendet wird, anzugeben, ob das Fahrzeug mit dem Zielobjekt kollidieren wird, wenn es auf dem Zielfahrweg in dem Zielfahrzustand fährt; und
wenn das zweite Vorhersageergebnis angibt, dass das Fahrzeug nicht mit dem Zielobjekt kollidieren wird, Steuern des Fahrzeugs, um in dem Zielfahrzustand zu fahren; wobei die Vorrichtung ferner eine Anweisungserzeugungseinheit (640) umfasst, die zu Folgendem konfiguriert ist:
wenn das zweite Vorhersageergebnis angibt, dass das Fahrzeug mit dem Zielobjekt kollidieren wird, Erzeugen einer Hindernisvermeidungsanweisung, wobei die Hindernisvermeidungsanweisung dazu verwendet wird, den Zielfahrweg zu aktualisieren und/oder eine Geschwindigkeit des Fahrzeugs auf eine voreingestellte Geschwindigkeit zu reduzieren.

8. Computerlesbares Speichermedium, das dazu konfiguriert ist, ein Computerprogramm zu speichern, wobei das Computerprogramm einen Computer in die Lage versetzt, das Verfahren nach einem der Ansprüche 1 bis 6 durchzuführen.

9. Computerprogrammprodukt, umfassend Computerprogrammanweisungen, wobei die Computerprogrammanweisungen einen Computer in die Lage versetzen, das Verfahren nach einem der Ansprüche 1 bis 6 durchzuführen.

## Revendications

1. Procédé de commande de véhicule, comprenant :
l'obtention d'informations sur un objet cible dans une plage prédéfinie d'un trajet de déplacement et d'un premier canal prédit d'un véhicule, dans lequel le premier canal prédit est un espace continu occupé lorsque le véhicule se déplace sur le trajet de déplacement cible dans un état de déplacement actuel (S210) ;
l'obtention d'un premier résultat de prédiction sur la base du premier canal prédit et des informations sur l'objet cible, dans lequel le premier résultat de prédiction est utilisé pour indiquer si le véhicule va entrer en collision avec l'objet cible lors du déplacement sur le trajet de déplacement cible dans l'état de déplacement actuel (S220) ; et
la commande du véhicule pour qu'il se déplace dans un état de déplacement cible lorsque le premier résultat de prédiction indique que le véhicule va entrer en collision avec l'objet cible, dans lequel
l'espace occupé par le véhicule dans l'état de déplacement cible est inférieur à l'espace occupé par le véhicule dans l'état de déplacement actuel ; dans lequel le procédé est **caractérisé en ce que** la commande du véhicule pour qu'il se déplace dans un état de déplacement cible lorsque le premier résultat de prédiction indique que le véhicule va entrer en collision avec l'objet cible lors du déplacement sur le trajet de déplacement cible dans l'état de déplacement actuel comprend :
l'obtention d'un second canal prédit du véhicule lorsque le premier résultat de prédiction indique que le véhicule va entrer en collision avec l'objet cible lors du déplacement sur le trajet de déplacement cible dans l'état de déplacement actuel, dans lequel le second canal prédit est un espace continu occupé lorsque le véhicule se déplace sur le trajet de déplacement cible dans l'état de déplacement actuel (S231) ;
l'obtention d'un second résultat de prédiction sur la base du second canal prédit et des informations sur l'objet cible, dans lequel le second résultat de prédiction est utilisé pour indiquer si le véhicule va entrer en collision avec l'objet cible lors du déplacement sur le trajet de déplacement cible dans l'état de déplacement cible (S232) ; et
lorsque le second résultat de prédiction indique que le véhicule ne va pas entrer en collision avec l'objet cible, la commande du véhicule pour qu'il se déplace dans l'état de déplacement cible ; et dans lequel le procédé comprend également :
lorsque le second résultat de prédiction indique que le véhicule va entrer en collision avec l'objet cible, la génération d'une instruction d'évitement d'obstacle, dans lequel l'instruction d'évitement d'obstacle est utilisée pour mettre à jour le trajet de déplacement cible et/ou réduire la vitesse du véhicule à une vitesse prédéfinie (S2331-1).

2. Procédé selon la revendication 1, dans lequel le procédé comprend également :
la détermination d'une position de collision du véhicule sur la base du premier canal prédit et des informations sur l'objet cible (S240) ; et
la détermination de l'état de déplacement cible sur la base de la position de collision du véhicule (S250).

3. Procédé selon la revendication 1 ou 2, dans lequel le procédé comprend également :
lorsque le second résultat de prédiction indique que le véhicule ne va pas entrer en collision avec l'objet cible lors du déplacement sur le trajet de déplacement cible dans l'état de déplacement cible, la lecture et/ou l'affichage d'un premier message d'invite, dans lequel le premier message d'invite est utilisé pour indiquer l'état de déplacement cible.

4. Procédé selon l'une quelconque des revendications 1 à 3, dans lequel le procédé comprend également :
lorsque le second résultat de prédiction indique que le véhicule va entrer en collision avec l'objet cible lors du déplacement sur le trajet de déplacement cible dans l'état de déplacement cible, la lecture et/ou l'affichage d'un second message d'invite, dans lequel le premier message d'invite est utilisé pour signaler une position de collision du véhicule.

5. Procédé selon l'une quelconque des revendications 1 à 4, dans lequel l'état de déplacement actuel comprend au moins l'une des situations suivantes : un toit ouvrant est dans un état ouvert, un rétroviseur gauche est dans un état ouvert, et un rétroviseur droit est dans un état ouvert.

6. Procédé selon l'une quelconque des revendications 1 à 5, dans lequel le procédé comprend également :
lorsque le véhicule se déplace sur le trajet de déplacement cible dans l'état de déplacement cible, l'obtention dynamique d'une distance entre l'objet cible et le véhicule ; et
lorsque l'objet cible est éloigné du véhicule, la commande du véhicule pour qu'il se déplace dans un état de déplacement avant l'état de déplacement cible.

7. Dispositif électronique (600), dans lequel le dispositif comprend :
une unité d'obtention (610), configurée pour obtenir des informations sur un objet cible dans une plage prédéfinie d'un trajet de déplacement cible et d'un premier canal prédit d'un véhicule, dans lequel le premier canal prédit est un espace continu occupé lorsque le véhicule se déplace sur le trajet de déplacement cible dans un état de déplacement actuel ;
une unité de prédiction (620), configurée pour obtenir un premier résultat de prédiction sur la base du premier canal prédit et des informations sur l'objet cible, dans lequel le premier résultat de prédiction est utilisé pour indiquer si le véhicule va entrer en collision avec l'objet cible lors du déplacement sur le trajet de déplacement cible dans l'état de déplacement actuel ; et
une unité de commande (630), configurée pour commander le véhicule pour qu'il se déplace dans un état de déplacement cible lorsque le premier résultat de prédiction indique que le véhicule va entrer en collision avec l'objet cible, dans lequel l'espace occupé par le véhicule dans l'état de déplacement cible est inférieur à l'espace occupé par le véhicule dans l'état de déplacement actuel ; dans lequel
l'unité de commande est **caractérisée en ce qu'**elle est spécifiquement configurée pour :
obtenir un second canal prédit du véhicule lorsque le premier résultat de prédiction indique que le véhicule va entrer en collision avec l'objet cible lors du déplacement sur le trajet de déplacement cible dans l'état de déplacement actuel, dans lequel le second canal prédit est un espace continu occupé lorsque le véhicule se déplace sur le trajet de déplacement cible dans l'état de déplacement actuel ;
obtenir un second résultat de prédiction sur la base du second canal prédit et des informations sur l'objet cible, dans lequel le second résultat de prédiction est utilisé pour indiquer si le véhicule va entrer en collision avec l'objet cible lors du déplacement sur le trajet de déplacement cible dans l'état de déplacement cible ; et
lorsque le second résultat de prédiction indique que le véhicule ne va pas entrer en collision avec l'objet cible, commander le véhicule pour qu'il se déplace dans l'état de déplacement cible ; dans lequel le dispositif comprend également une unité de génération d'instructions (640), configurée pour :
lorsque le second résultat de prédiction indique que le véhicule va entrer en collision avec l'objet cible, générer une instruction d'évitement d'obstacle, dans lequel l'instruction d'évitement d'obstacle est utilisée pour mettre à jour le trajet de déplacement cible et/ou réduire une vitesse du véhicule à une vitesse prédéfinie.

8. Support de stockage lisible par ordinateur, configuré pour stocker un programme informatique, dans lequel le programme informatique permet à un ordinateur de réaliser le procédé selon l'une quelconque des revendications 1 à 6.

9. Produit de programme informatique, comprenant des instructions de programme informatique, dans lequel les instructions de programme informatique permettent à un ordinateur de réaliser le procédé selon l'une quelconque des revendications 1 à 6.
